# EUROPEAN PATENT APPLICATION

(11) **EP 4 687 045 A1**
(43) Date of publication of application: **04.02.2026**
(21) Application number: 25193419.6
(22) Date of filing: 01.08.2025
(51) Int. Cl.: G06F 16/16

(54) **INFORMATION PROCESSING APPARATUS, INFORMATION PROCESSING SYSTEM, AND METHOD**

(30) Priority: 02.08.2024 JP 2024127952
(71) Applicant: Toshiba TEC Kabushiki Kaisha, Tokyo 141-8562 (JP)
(72) Inventor: Endo, Koji, Tokyo, 141-8562 (JP)
(74) Representative: Bandpay & Greuter

(57) **Abstract**

According to an embodiment, an information processing apparatus is an apparatus that is not accessible to a storage device. The information processing apparatus includes a receiver and a transmitter. The receiver receives a first electronic file. The transmitter transmits a second electronic file, which is the same electronic file as the first electronic file or an electronic file generated based on the first electronic file, and storage destination information indicating a storage area of the storage device as a storage destination of the second electronic file to a communication device accessible to the storage device.

## Description

### FIELD

Embodiments described herein relate generally to an information processing apparatus, an information processing system, and a method.

### BACKGROUND

Currently, as a cloud service, file transfer services are provided by various companies. The file transfer service performs various processes on document files uploaded from a multi-function peripheral or smartphone, etc. For example, the file transfer service can extract information of a document by processing OCR (Optical Character Recognition) for a document file. The file transfer service stores the uploaded document file in an external storage service. External storage services are provided as cloud services.

In the file transfer service, there is a need to store document files in storage devices of an internal network. However, there is a firewall in the storage device of the internal network. Since the file transfer service is not accessible to the internal network storage device, it is not possible to store the document files directly on a storage device.

### DESCRIPTION OF THE DRAWINGS

FIG. 1 is a block diagram illustrating a schematic example of the configuration of an information processing system according to an embodiment;
FIG. 2 is a block diagram illustrating a schematic example of the configuration of an information processing apparatus, according to an embodiment;
FIG. 3 is a block diagram illustrating a schematic example of the configuration of a multi-function peripheral, according to an embodiment;
FIG. 4 is a diagram illustrating a data structure of data stored in a template information storage area, according to an embodiment;
FIG. 5 is a sequence diagram illustrating a registration process of a multi-function peripheral, according to an embodiment;
FIG. 6 is a sequence diagram illustrating a setting process of template information, according to an embodiment;
FIG. 7 is a sequence diagram illustrating a confirmation process of an access result, according to an embodiment;
FIG. 8 is a sequence diagram illustrating processing of a first electronic file, according to an embodiment; and
FIG. 9 is a sequence diagram illustrating a storing process of a second electronic file, according to an embodiment.

### DETAILED DESCRIPTION

Embodiments provide a technique that allows an electronic file to be stored in a storage area of a storage device that is not accessible. To this end, an information processing apparatus, an information processing system, and an information processing method according to appended claims are provided.

In general, according to an embodiment, an information processing apparatus is a device that is not accessible to the storage device. The information processing apparatus includes a reception unit and a transmission unit. The reception unit receives a first electronic file. The transmission unit transmits a second electronic file, which is the same electronic file as the first electronic file or an electronic file generated based on the first electronic file, and storage destination information indicating a storage area of the storage device as a storage destination of the second electronic file to a communication device accessible to the storage device.

Some embodiments will be described below with reference to the drawings. Note that each drawing used in the description of the following embodiments may change the scale of each part as appropriate. Also, each drawing used in the description of the following embodiments may omit the configuration for the purpose of description.

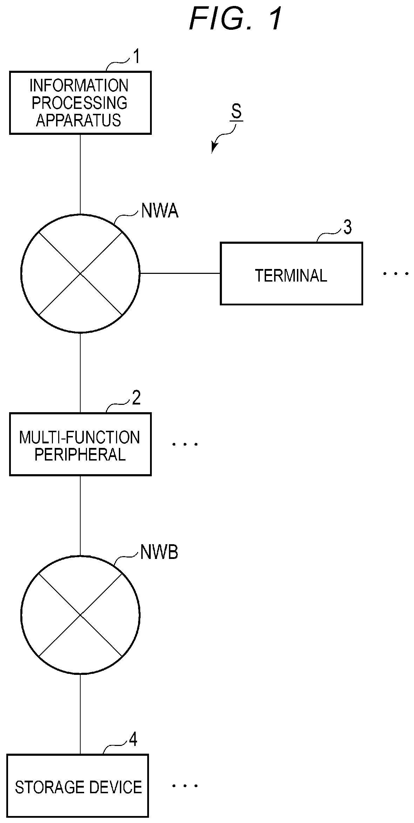

FIG. 1 is a block diagram illustrating a schematic example of the configuration of an information processing system S. The information processing system S is a system for processing a transfer of an electronic file.

The electronic file is any file that has been digitized. An electronic file is described as an electronic file indicating a form but is not limited thereto. For example, the forms may be an application, an invoice, or an order, but are not limited thereto. For example, an application is an application for travel expenses but is not limited thereto.

An electronic file is described as image data generated by scanning a medium such as paper with a multi-function peripheral 2 but is not limited thereto. The electronic file may be data including text data generated by an application, such as document creation at a terminal 3.

The information processing system S includes an information processing apparatus 1 (e.g., a controller, a processor, etc.), a plurality of multi-function peripherals 2, a plurality of terminals 3, and a plurality of storage devices 4 (e.g., memory devices). The information processing system S may include one multi-function peripheral 2, rather than multiple units. The information processing system S may include one terminal 3, rather than multiple units. The information processing system S may include one storage device 4, rather than multiple units. The information processing system S is an example of an information processing system including at least two of the information processing apparatus 1, the plurality of multi-function peripherals 2, the plurality of terminals 3, and the plurality of storage devices 4.

The information processing apparatus 1, the plurality of multi-function peripherals 2, and the plurality of terminals 3 are communicably connected to each other via a network NWA. The network NWA includes one or more networks, such as the Internet, a cellular network, and a LAN (Local Area Network). The LAN may be a wireless LAN or a wired LAN. The plurality of multi-function peripherals 2 and the plurality of storage devices 4 are communicably connected to each other via a network NWB. The network NWB includes a network, such as a LAN. For example, the network NWB is an internal network. In the following, the notation "network" shall include the meaning of a network of either the network NWA and the network NWB, or a combination of both.

The information processing apparatus 1 is an apparatus for controlling a file transfer service. The file transfer service includes a service for storing an electronic file in a storage area of the storage device 4. Hereinafter, the electronic file received by the information processing apparatus 1 from a device such as the multi-function peripheral 2 or the terminal 3 is also referred to as a first electronic file. The electronic file transmitted by the information processing apparatus 1 to the multi-function peripheral 2 is also referred to as a second electronic file. The second electronic file is the same electronic file as the first electronic file, or an electronic file generated based on the first electronic file. The second electronic file transmitted from the information processing apparatus 1 to the multi-function peripheral 2 is stored in a storage area of the storage device 4 via the multi-function peripheral 2. For example, the storage area is a folder.

For example, the information processing apparatus 1 is a server on a cloud. Note that the information processing apparatus 1 is a device that is not accessible to the storage device 4 via a network due to a firewall. The access includes the meaning of the connection and the communication.

The multi-function peripheral 2 is a digital multi-function peripheral for comprehensively utilizing the functions of various office equipment. The multi-function peripheral 2 has a scanning function that generates image data of a medium by scanning the medium. The multi-function peripheral 2 has a function of printing based on image data generated by the scanning function or data transmitted from the terminal 3. For example, the multi-function peripheral 2 is MFP (Multifunction Peripheral). Note that the multi-function peripheral 2 is a device that can access the storage device 4 via a network. The multi-function peripheral 2 is an example of a communication device capable of communicating with other devices.

The terminal 3 is a device that processes information. The terminal 3 can generate an electronic file including text data by an application, such as document creation. For example, the terminal 3 is a PC (Personal Computer), a tablet terminal, or a smartphone, but is not limited thereto.

The storage device 4 is a device for storing the second electronic file. The information processing apparatus is not accessible to the storage device 4 via a network. The storage device 4 is a device that the multi-function peripheral 2 can access via a network.

The storage device 4 may include a processing circuit. The processing circuit includes one or more circuits that execute a plurality of processes with a plurality of functions. For example, the circuit is a processor, an ASIC (Application Specific Integrated Circuit), or an FPGA (field-Programmable Gate Array), but is not limited thereto. For example, the processor is a CPU (Central Processing Unit) or a GPU (Graphics Processing Unit) but is not limited thereto. The storage device 4 may include storage for storing the second electronic file. The storage includes one or more storage devices. For example, the storage device is a semiconductor storage medium such as, but not limited to, an HDD (Hard Disk Drive) and an SSD (Solid State Drive).

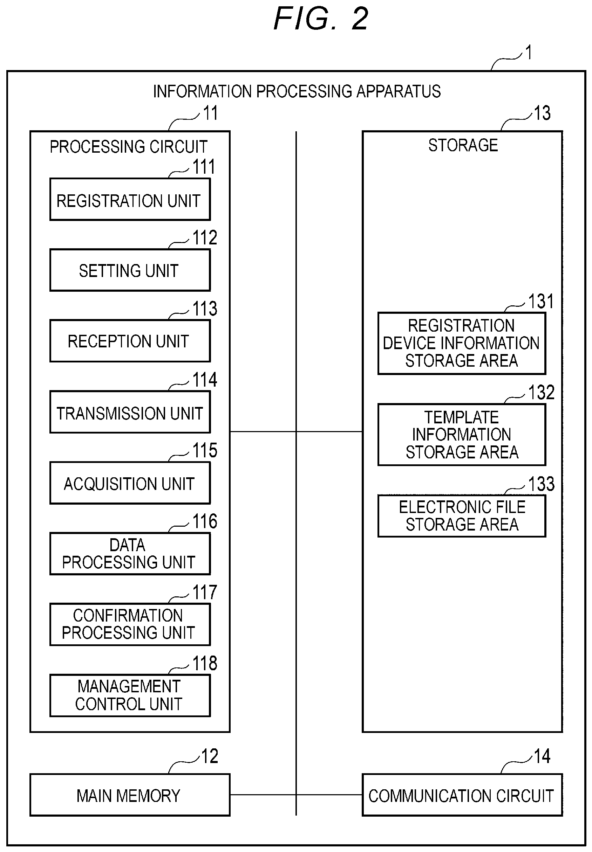

FIG. 2 is a block diagram illustrating a schematic example of the configuration of the information processing apparatus 1. The information processing apparatus 1 includes a processing circuit 11, a main memory 12, a storage 13, and a communication circuit 14. The processing circuit 11, the main memory 12, the storage 13, and the communication circuit 14 are connected to each other to enable signal input and output.

The processing circuit 11 corresponds to a central portion of the information processing apparatus 1. The processing circuit 11 is a component that constitutes a computer of the information processing apparatus 1. The processing circuit 11 includes one or more circuits that execute a plurality of processes with a plurality of functions. The processing circuit 11 loads a program stored in the main memory 12 or the storage 13 into the main memory 12. The processing circuit 11 makes various processes executable by executing a program loaded in the main memory 12.

The main memory 12 corresponds to a main storage portion of the information processing apparatus 1. The main memory 12 is a component that constitutes a computer of the information processing apparatus 1. The main memory 12 includes a non-volatile memory region and a volatile memory region. The main memory 12 stores an operating system or program in a non-volatile memory region. The main memory 12 uses a volatile memory region as a work area where data can be rewritten as appropriate by the processing circuit 11. For example, the main memory 12 includes a ROM (Read Only Memory) as a non-volatile memory region. For example, the main memory 12 includes a RAM (Random Access Memory) as a volatile memory region.

The storage 13 corresponds to an auxiliary storage portion of the information processing apparatus 1. The storage 13 includes one or more storage devices. The storage 13 stores the program described above, data used by the processing circuit 11 to perform various processes, and data generated by processing in the processing circuit 11.

The storage 13 includes a registration device information storage area 131. The registration device information storage area 131 stores registration device information for each multi-function peripheral 2 registered as a communication device used in a file transfer service. The registration device information storage area 131 is an example of a storage unit that stores registration device information. The registration device information is information identifiable to the multi-function peripheral 2 registered as a communication device used in a file transfer service.

The storage 13 includes a template information storage area 132. The template information storage area 132 stores template information for each template. The template is a template set up according to the purpose of the file transfer service. The template information storage area 132 is an example of a storage unit that stores template information. For example, a template is a template set up for the purpose of processing an application for travel expenses but is not limited thereto. The template information is information indicating the content of the template. The template information can include name information, processing content information, storage destination information, and destination information associated with each other.

The name information is information indicating the name (e.g., title) of the template. If the template is a template set up for the purpose of processing an application for travel expenses, the name of the template may be travel expenses.

The processing content information is information indicating at least one process for a first electronic file executed by the information processing apparatus 1. For example, the processing by the information processing apparatus 1 is an information extraction and a file division, etc., but is not limited thereto. An information extraction is a process of extracting information from a first electronic file by a process of OCR.

File partitioning is a process of partitioning a first electronic file into a plurality of second electronic files. The information processing apparatus 1 can divide the first electronic file into a plurality of second electronic files by using the barcode contained in the first electronic file as a separator. For example, it is assumed that the first electronic file is composed of data on page 10 and contains barcodes on pages 3 and 6. In this example, the information processing apparatus 1 divides the first electronic file into three second electronic files. The first second electronic file is a second electronic file composed of data on pages 1 to 3. The second second electronic file is a second electronic file composed of data on pages 4 to 6. The third second electronic file is a second electronic file composed of data on pages 7 to 10.

The storage destination information is information indicating the storage destination of the second electronic file. In the following, the notation "storage destination" shall refer to the storage destination of the second electronic file. For example, the storage destination is a storage area of the storage device 4.

The destination information is information indicating the destination of the second electronic file. The destination includes the meaning of the transmitting destination. In the following, the notation "destination" shall refer to the destination of the second electronic file. The destination is the communication device that relays the second electronic file transmitted from the information processing apparatus 1 and stores the relayed second electronic file in the storage area of the storage device 4. For example, the destination is a registered multi-function peripheral 2.

The storage 13 includes an electronic file storage area 133. The electronic file storage area 133 stores the second electronic file and storage processing information. The electronic file storage area 133 is an example of a storage unit that stores the second electronic file and storage processing information. The second electronic file and the storage processing information are associated with the destination information and the storage destination information included in the template information of the template selected for the first electronic file.

The storage processing information is information for storing the second electronic file in the storage destination. For example, the storage processing information is information for storing the second electronic file in the storage destination with a specified file name. The specified file name may be a name including a character string extracted from the first electronic file by information extraction. If the first electronic file is an electronic file of an invoice, the specified file name may be a name including an invoice number extracted from the first electronic file.

The communication circuit 14 is an interface for inputting or outputting signals. The communication circuit 14 communicably connects the information processing apparatus 1 to other devices via a network NW. The communication circuit 14 is an example of a communication unit of the information processing apparatus 1.

Note that the hardware configuration of the information processing apparatus 1 is not limited to the above-described configuration. The information processing apparatus 1 can omit and change the above-described components and add new components as appropriate.

Each part implemented by the processing circuit 11 (e.g., a processor) will be described. The processing circuit 11 implements one or more specialized circuits such as a registration unit 111 (e.g., a register, a registration device, a registration module, etc.), a setting unit 112, a reception unit 113 (e.g., a receiver, a receiving device, a receiving module, etc.), a transmission unit 114 (e.g., a transmitter, a transmission device, a transmission module, etc.), an acquisition unit 115 (an acquirer, and acquisition device, and acquisition module, etc.), a data processing unit 116 (e.g., a data processor, a data processing circuit, data processing circuitry, etc.), a confirmation processing unit 117 (e.g., a confirmation processor, a confirmation processing circuit, confirmation processing circuitry, etc.), and a management control unit 118 (e.g., a controller, a management controller, a management control device, etc.). Each part implemented by the processing circuit 11 can also be a function.

The registration unit 111 performs a process for registering the multi-function peripheral 2 with the information processing apparatus 1 as a communication device used in a file transfer service.

The setting unit 112 sets template information.

The reception unit 113 receives a signal via a network.

The transmission unit 114 transmits a signal via a network.

The acquisition unit 115 acquires template information.

The data processing unit 116 processes a first electronic file. The data processing unit 116 is an example of a processing unit (e.g., a processor) that processes a first electronic file.

The confirmation processing unit 117 confirms the result of accessing the storage area of the storage device 4 indicated by the storage destination information by the multi-function peripheral 2 indicated by the destination information based on the storage destination information and the destination information. The access result is an access success or an access failure. The access success means the multi-function peripheral 2 is able to access the storage area. The access failure means the multi-function peripheral 2 is not being able to access the storage area. The confirmation processing unit 117 is an example of a processing unit that confirms an access result.

The management control unit 118 controls the management of the second electronic file stored in the electronic file storage area 133. The second electronic file stored in the electronic file storage area 133 is an example of the second electronic file in the information processing apparatus 1. The management control unit 118 is an example of a control unit (e.g., a controller) that controls the management of the second electronic file. The management control unit 118 can control the management of the storage processing information as well as the second electronic file.

Controlling the management of the second electronic file includes maintaining the second electronic file in the state stored in the electronic file storage area 133. Maintenance of the second electronic file in the state stored in the electronic file storage area 133 is an example of maintaining the management of the second electronic file in the information processing apparatus 1. Controlling the management of the second electronic file includes deleting the second electronic file from the electronic file storage area 133. The deletion of the second electronic file from the electronic file storage area 133 is an example of ending the management of the second electronic file in the information processing apparatus 1.

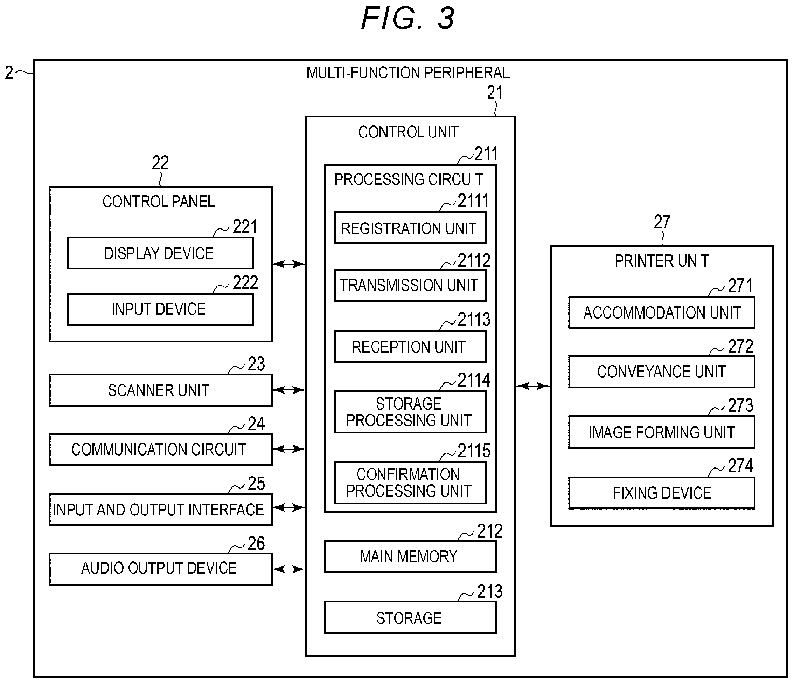

FIG. 3 is a block diagram illustrating a schematic example of the configuration of the multi-function peripheral 2. The multi-function peripheral 2 includes a control unit 21 (e.g., a controller), a control panel 22, a scanner unit 23, a communication circuit 24, an input and output interface 25, an audio output device 26, and a printer unit 27. The control unit 21, the control panel 22, the scanner unit 23, the communication circuit 24, the input and output interface 25, the audio output device 26, and the printer unit 27 are connected to each other to input and output signals.

The control unit 21 controls the operation of each part of the multi-function peripheral 2. The control unit 21 includes a processing circuit 211, a main memory 212, and a storage 213.

The processing circuit 211 corresponds to a central portion of the multi-function peripheral 2. The processing circuit 211 is a component that constitutes a computer of the multi-function peripheral 2. The processing circuit 211 includes one or more circuits that execute a plurality of processes with a plurality of functions. The processing circuit 211 loads a program stored in the main memory 212 or the storage 213 into the main memory 212. The processing circuit 211 makes various processes executable by executing a program loaded in the main memory 212.

The main memory 212 corresponds to a main storage portion of the multi-function peripheral 2. The main memory 212 is a component that constitutes a computer of the multi-function peripheral 2. The main memory 212 may be configured in the same manner as the main memory 12.

The storage 213 corresponds to an auxiliary storage portion of the multi-function peripheral 2. The storage 213 includes one or more storage devices. The storage 213 stores the program described above, data used by the processing circuit 211 to perform various processes, and data generated by processing in the processing circuit 211.

The control panel 22 includes a display device 221 and an input device 222. The display device 221 is a device capable of displaying an image. The display device 221 is a liquid crystal display or an organic EL (electroluminescence) display but is not limited thereto.

The input device 222 is a device capable of inputting an indication based on a user operation. The input device 222 may include a pressable button. The input device 222 may be a touch panel configured integrally with the display device 221.

The scanner unit 23 is a device that reads an image such as a character, a shape, and a photo drawn on a medium by scanning the medium placed in a predetermined position. The scanner unit 23 includes a line sensor. The line sensor may be a CCD (Charge Coupled Device) type. The line sensor may be a CIS (Contact Image Sensor) type. The scanner unit 23 generates image data based on the image read using the line sensor.

The communication circuit 24 is an interface for inputting or outputting signals. The communication circuit 24 communicably connects the multi-function peripheral 2 to other devices via the network NW.

The input and output interface 25 is an interface for connecting the multi-function peripheral 2 to an external device. The input and output interface 25 includes a connector of the wired cable.

The audio output device 26 is a device capable of outputting audio by control of the processing circuit 211. For example, the audio output device 26 is a speaker.

The printer unit 27 is a unit for printing. The printer unit 27 includes an accommodation unit 271, a conveyance unit 272, an image forming unit 273, and a fixing device 274. The accommodation unit 271 accommodates sheets. The conveyance unit 272 conveys the sheet in the printer unit 27. The image forming unit 273 forms a toner image on the sheet. The image forming unit 273 includes an intermediate transfer belt, a plurality of developing units, an exposure device, a transfer unit, etc. The fixing device 274 applies heat and pressure to the sheet on which the toner image supplied from the image forming unit 273 is formed. The fixing device 274 forms an image on the sheet by fixing a toner image formed on the sheet by heat and pressure.

Note that the hardware configuration of the multi-function peripheral 2 is not limited to the above-described configuration. The multi-function peripheral 2 can omit and change the above-described components and add new components as appropriate.

Each part implemented by the processing circuit 211 will be described. The processing circuit 211 implements a registration unit 2111, a transmission unit 2112, a reception unit 2113, a storage processing unit 2114, and a confirmation processing unit 2115. Each part implemented by the processing circuit 211 can also be a function.

The registration unit 2111 performs a process for registering the multi-function peripheral 2 with the information processing apparatus 1 as a communication device used in a file transfer service.

The transmission unit 2112 transmits a signal via a network.

The reception unit 2113 receives a signal via a network.

The storage processing unit 2114 stores the second electronic file in the storage area of the storage device 4.

The confirmation processing unit 2115 accesses the storage area of the storage device 4 indicated by the storage destination information and confirms the access result based on the storage destination information. The confirmation processing unit 2115 is an example of a processing unit (e.g., a processor) that confirms an access result.

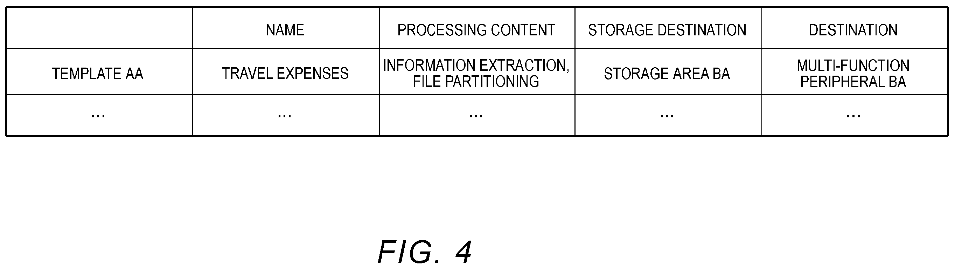

FIG. 4 is a diagram illustrating a data structure of data stored in a template information storage area 132. The template information storage area 132 stores template information for each template. The template information includes name information, processing content information, storage destination information, and destination information associated with the template.

The processing of the information processing system S will be described. Note that the processing procedures described below are only examples, and each process may be changed as much as possible. Also, for the processing procedures described below, depending on the embodiment, steps can be omitted, replaced, and added as appropriate.

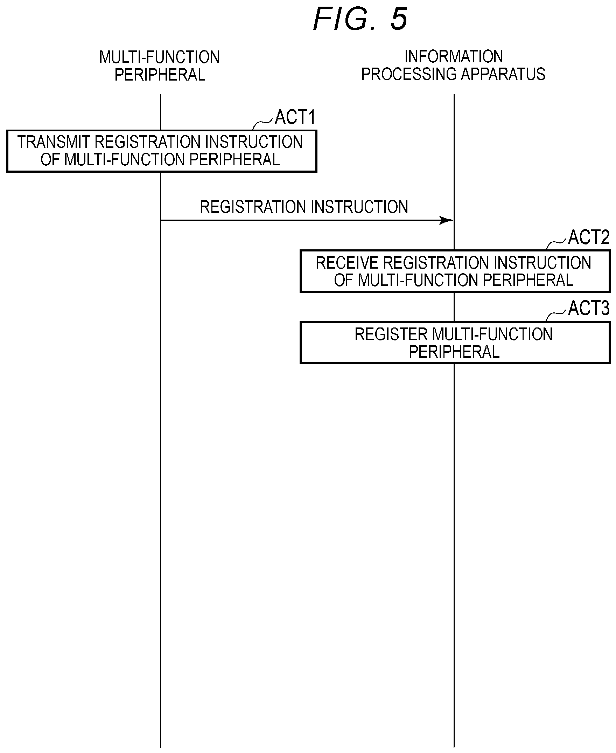

FIG. 5 is a sequence diagram illustrating a registration process of the multi-function peripheral 2. Here, the administrator may input a registration instruction of the multi-function peripheral 2 using the input device 222 of the multi-function peripheral 2. The registration instruction of the multi-function peripheral 2 is an instruction for registering the multi-function peripheral 2 with the information processing apparatus 1 as a communication device used in a file transfer service. The registration instruction of the multi-function peripheral 2 includes information identifiable to the multi-function peripheral 2.

The processing circuit 211 of the multi-function peripheral 2 transmits a registration instruction of the multi-function peripheral 2 to register the multi-function peripheral 2 with the information processing apparatus 1 as a communication device used in a file transfer service (ACT1). ACT1 may be processed by the registration unit 2111. In ACT1, for example, the processing circuit 211 transmits a registration instruction of the multi-function peripheral 2 to the information processing apparatus 1 via the network NWA.

The processing circuit 11 of the information processing apparatus 1 receives the registration instruction of the multi-function peripheral 2 (ACT2). ACT2 may be processed by the registration unit 111. In ACT2, for example, the processing circuit 11 receives the registration instruction of the multi-function peripheral 2 from the multi-function peripheral 2 via the network NWA.

The processing circuit 11 of the information processing apparatus 1 registers the multi-function peripheral 2 with the information processing apparatus 1 as a communication device used in a file transfer service based on the registration instruction of the multi-function peripheral 2 (ACT3). ACT3 may be processed by the registration unit 111. In ACT3, for example, the processing circuit 11 registers the multi-function peripheral 2 with the information processing apparatus 1 by storing the registration device information in the registration device information storage area 131.

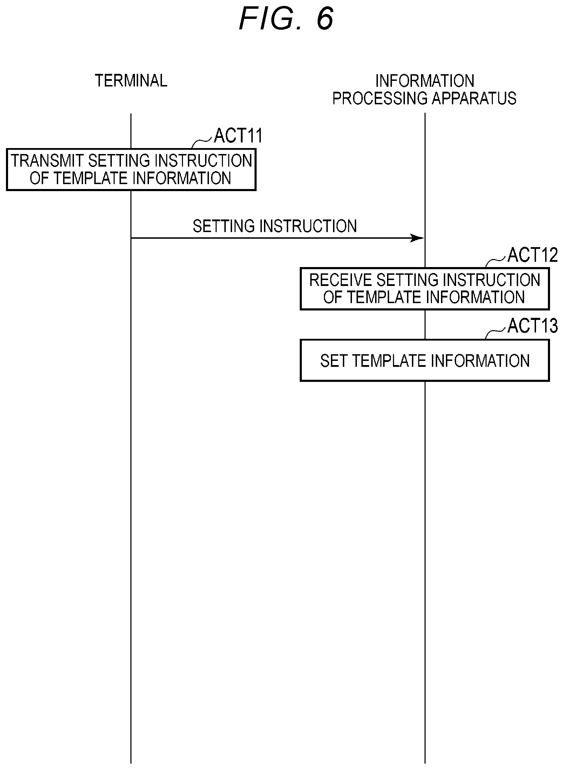

FIG. 6 is a sequence diagram illustrating a setting process of template information. Here, the administrator may input a setting instruction of the template information using the terminal 3 on a web page. The setting instruction of template information is an instruction for causing template information to be set in the information processing apparatus 1. The setting instruction of template information includes template information.

The terminal 3 transmits the setting instruction of template information (ACT11). In ACT11, for example, the terminal 3 transmits the setting instruction of the template to the information processing apparatus 1 via the network NWA.

The processing circuit 11 of the information processing apparatus 1 receives the setting instruction of the template information (ACT12). ACT12 may be processed by the reception unit 113. In ACT12, for example, the processing circuit 11 receives the setting instruction of the template information from the terminal 3 via the network NWA.

The processing circuit 11 of the information processing apparatus 1 sets the template information based on the setting instruction of the template information (ACT13). ACT13 may be processed by the setting unit 112. In ACT13, for example, the processing circuit 11 sets the template information by storing the template information in the template information storage area 132. Setting the template information is an example of setting some or all of the name information, the processing content information, the storage destination information, and the destination information associated with each other.

As described above, the information processing apparatus 1 can set the template information. As a result, the information processing apparatus 1 can set template information combining the storage destination information and the destination information for each template.

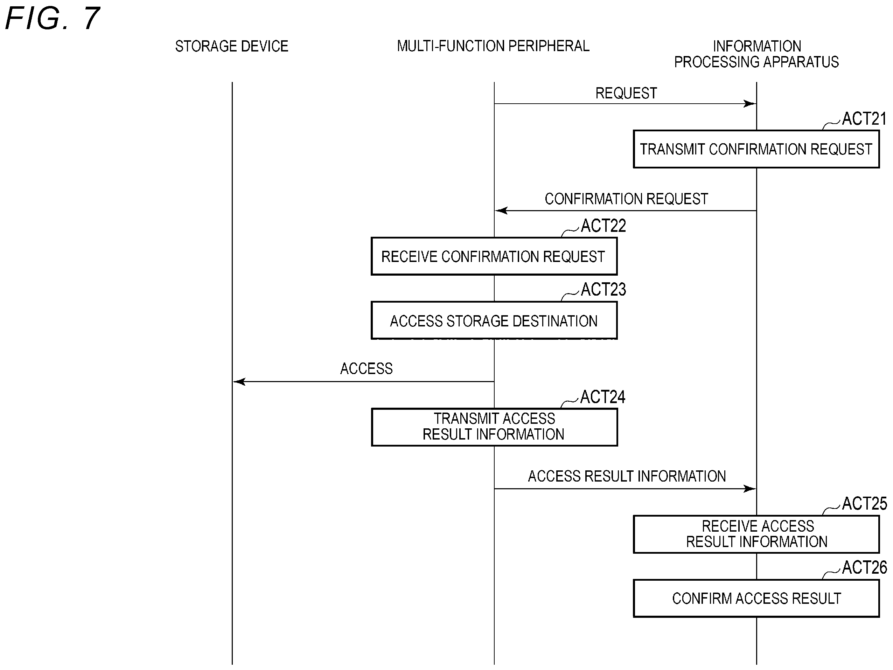

FIG. 7 is a sequence diagram illustrating a confirmation process of an access result. The administrator may input a start instruction to start the confirmation process of the access result to the information processing apparatus 1 using the terminal 3 on a web page. The administrator may input the start instruction using the terminal 3 when inputting the setting instruction of the template information. The start instruction includes the storage destination information specified by the administrator and the destination information associated with the storage destination information. The start instruction may be input based on the selection of a button in the web page.

The following will be described with respect to any one multi-function peripheral 2. The multi-function peripheral 2 is assumed to be periodically transmitting a request to the information processing apparatus 1 via the network NWA by performing a poll. The request includes the meaning of the query.

The processing circuit 11 of the information processing apparatus 1 transmits a confirmation request to confirm the access result as a response to the request based on the start instruction (ACT21). ACT21 may be processed by the confirmation processing unit 117. The confirmation request is a request for the multi-function peripheral 2 indicated by the destination information to confirm the result of accessing the storage area of the storage device 4 indicated by the storage destination information. In ACT21, for example, the processing circuit 11 transmits the confirmation request to the multi-function peripheral 2 indicated by the destination information via the network NWA based on the destination information and the storage destination information. The confirmation request includes the storage destination information.

The processing circuit 211 of the multi-function peripheral 2 receives the confirmation request (ACT22). ACT22 may be processed by the confirmation processing unit 2115. In ACT22, for example, the processing circuit 211 receives the confirmation request from the information processing apparatus 1 via the network NWA.

The processing circuit 211 of the multi-function peripheral 2 accesses the storage destination based on the storage destination information included in the confirmation request (ACT23). ACT23 may be processed by the confirmation processing unit 2115. In ACT23, for example, the processing circuit 211 accesses the storage area of the storage device 4 indicated by the storage destination information via the network NWB based on the storage destination information. The processing circuit 211 confirms the access result based on the access to the storage area of the storage device 4.

The processing circuit 211 of the multi-function peripheral 2 transmits the access result information (ACT24). ACT24 may be processed by the confirmation processing unit 2115. In ACT24, for example, the processing circuit 211 transmits the access result information to the information processing apparatus 1 via the network NWA based on the confirmation of the access result. The access result information is the information indicating the access result.

The processing circuit 11 of the information processing apparatus 1 receives the access result information (ACT25). ACT25 may be processed by the confirmation processing unit 117. In ACT25, for example, the processing circuit 11 receives the access result information from the multi-function peripheral 2 via the network NWA.

The processing circuit 11 of the information processing apparatus 1 confirms the access result indicated by the access result information based on the access result information (ACT26). ACT26 may be processed by the confirmation processing unit 117. In this way, the processing circuit 11 can confirm the access result based on the storage destination information and the destination information. The processing circuit 11 may store the access result information in the template information storage area 132 in association with the template information based on the confirmation of the access result. If the access result is an access failure, the processing circuit 11 may notify the terminal 3 of the administrator of the alert.

Note that the number of times the processing circuit 11 transmits the confirmation request to the multi-function peripheral 2 based on the start instruction is not limited to one time. The processing circuit 11 may periodically transmit the confirmation request to the multi-function peripheral 2 to confirm the access result based on the start instruction.

Although ACT21 describes an example in which the processing circuit 11 transmits the confirmation request to the multi-function peripheral 2 as a response to the request, it is not limited thereto. Communication such as MQTT (Message Queueing Telemetry Transport) may be used between the information processing apparatus 1 and the multi-function peripheral 2. In this case, the processing circuit 11 of the information processing apparatus 1 can transmit the confirmation request to the multi-function peripheral 2 without requiring a request from the multi-function peripheral 2 when the connection is tied.

As described above, the information processing apparatus 1 can confirm the access result based on the storage destination information and the destination information. As a result, the information processing apparatus 1 can confirm whether the multi-function peripheral 2 can access the storage area of the storage device 4.The information processing apparatus 1 is not accessible to the storage device 4.

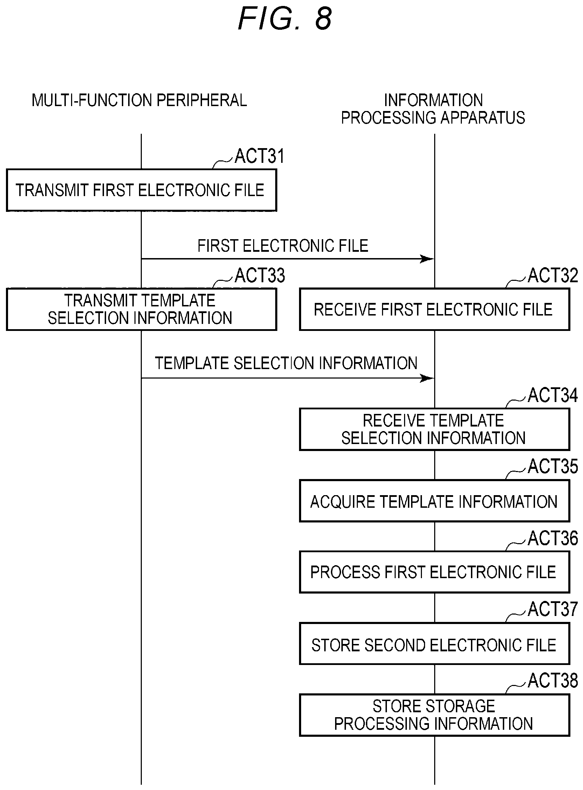

FIG. 8 is a sequence diagram illustrating the processing of the first electronic file.

Here, a user can upload the first electronic file to the information processing apparatus 1 using the multi-function peripheral 2. Note that a user can also upload the first electronic file to the information processing apparatus 1 using the terminal 3.

The processing circuit 211 of the multi-function peripheral 2 transmits the first electronic file (ACT31). ACT31 may be processed by the transmission unit 2112. In ACT31, for example, the processing circuit 211 transmits the first electronic file specified by the user to the information processing apparatus 1 via the network NWA.

The processing circuit 11 of the information processing apparatus 1 receives the first electronic file (ACT32). ACT32 may be processed by the reception unit 113. In ACT32, for example, the processing circuit 11 receives the first electronic file specified by the user from the multi-function peripheral 2 via the network NWA.

The processing circuit 211 of the multi-function peripheral 2 transmits the template selection information (ACT33). ACT33 may be processed by the transmission unit 2112. The template selection information is information identifiable to the one template selected from a plurality of templates. The user may refer to the name of each template displayed in the display device 321 and select one template from the plurality of templates. In ACT33, for example, the processing circuit 211 transmits the template selection information based on the user's selection to the information processing apparatus 1 via the network NWA.

The processing circuit 11 of the information processing apparatus 1 receives the template selection information (ACT34). ACT34 may be processed by the reception unit 113. In ACT34, for example, the processing circuit 11 receives the template selection information from the multi-function peripheral 2 via the network NWA.

The processing circuit 11 of the information processing apparatus 1 acquires the template information (ACT35). ACT35 may be processed by the acquisition unit 115. In ACT35, for example, the processing circuit 11 acquires the template information from the template information storage area 132 based on the template selection information.

Since the template information includes processing content information, acquiring the template information is an example of acquiring processing content information. Since the template information includes storage destination information, acquiring the template information is an example of acquiring storage destination information. Since the template information includes destination information, acquiring the template information is an example of acquiring destination information.

The processing circuit 11 of the information processing apparatus 1 processes the first electronic file (ACT36). ACT36 may be processed by the data processing unit 116. In ACT36, for example, the processing circuit 11 executes each process indicated by the processing content information included in the acquired template information for the first electronic file.

The processing circuit 11 of the information processing apparatus 1 stores the second electronic file in the electronic file storage area 133 based on the processing of the first electronic file (ACT37). ACT37 may be processed by the data processing unit 116. If the processing circuit 11 does not execute file partitioning on the first electronic file, the second electronic file is the same electronic file as the first electronic file. If the processing circuit 11 executes file partitioning on the first electronic file, the second electronic file is an electronic file generated based on the first electronic file. In ACT37, for example, the processing circuit 11 stores the second electronic file in the electronic file storage area 133 in association with the storage destination information and the destination information included in the template information acquired in ACT35.

The processing circuit 11 of the information processing apparatus 1 stores the storage processing information in the electronic file storage area 133 based on the processing of the first electronic file (ACT38). ACT38 may be processed by the data processing unit 116. In ACT38, for example, the processing circuit 11 generates the storage processing information based on the processing of the first electronic file. The processing circuit 11 stores the storage processing information in the electronic file storage area 133 in association with the storage destination information and the destination information included in the template information acquired in ACT35.

Although ACT34 describes an example in which the processing circuit 11 acquires the template information based on the template selection information, but it is not limited thereto. The processing circuit 11 may acquire the template information of the template suitable for the first electronic file without requiring the template selection information. In this example, the processing circuit 11 selects a template for the first electronic file based on the information extracted from the first electronic file. The processing circuit 11 acquires the template information of the template selected for the first electronic file. This eliminates the need for a user to select a template when uploading the first electronic file.

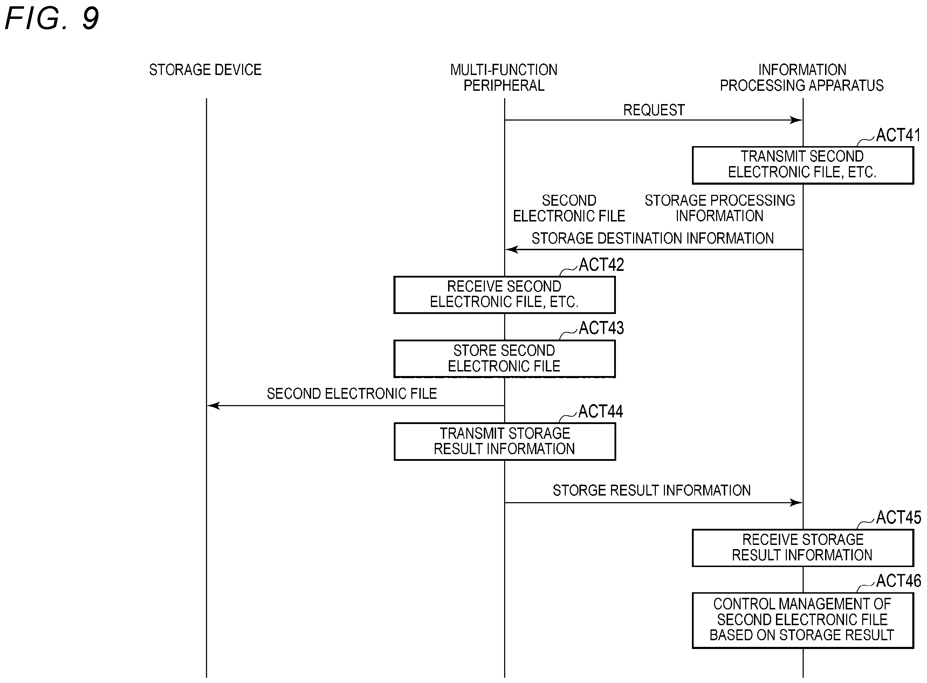

FIG. 9 is a sequence diagram illustrating a storing process of the second electronic file. The following will be described with respect to any one multi-function peripheral 2 and any one storage device 4. The multi-function peripheral 2 is assumed to be periodically transmitting a request to the information processing apparatus 1 via the network NWA by performing a poll. The multi-function peripheral 2 may download the second electronic file and the storage processing information. The second electronic file and the storage processing information are associated with the storage destination information and the destination information. The storage destination information indicates the storage area of the storage device 4 as a storage destination. The destination information indicates the multi-function peripheral 2 as a destination.

The processing circuit 11 of the information processing apparatus 1 transmits the second electronic file, the storage processing information and the storage destination information based on the destination information as a response to the request (ACT41). ACT41 may be processed by the transmission unit 114. In ACT41, for example, the processing circuit 11 transmits the second electronic file, the storage processing information and the storage destination information to the multi-function peripheral 2 via the network NWA based on the destination information. Transmitting the second electronic file, the storage processing information, and the storage destination information includes not only the meaning of transmitting at the same timing in bulk, but also the meaning of transmitting at different timings individually. In some examples, the transmission of the storage destination information may be omitted.

The processing circuit 211 of the multi-function peripheral 2 receives the second electronic file, the storage processing information and the storage destination information (ACT42). ACT42 may be processed by the reception unit 2113. In ACT42, for example, the processing circuit 211 receives the second electronic file, the storage processing information and the storage destination information from the information processing apparatus 1 via the network NWA. Receiving the second electronic file, the storage processing information, and the storage destination information includes not only the meaning of receiving at the same timing in bulk, but also the meaning of receiving at different timings individually. In some examples, the transmission of the storage destination information may be omitted.

The processing circuit 211 of the multi-function peripheral 2 stores the second electronic file in the storage area of the storage device 4 based on the storage destination information (ACT43). ACT43 may be processed by the storage processing unit 2114. In ACT43, for example, the processing circuit 211 stores the second electronic file in the storage area of the storage device 4 indicated by the storage destination information via the network NWB. The processing circuit 211 can store the second electronic file in the storage area of the storage device 4 based on the storage processing information. Note that depending on the state of the storage device 4 or the state of the network NWB, the processing circuit 211 may not be able to store the second electronic file in the storage area of the storage device 4.

The processing circuit 211 of the multi-function peripheral 2 transmits storage result information (ACT44). ACT44 may be processed by the transmission unit 2112. In ACT44, for example, the processing circuit 211 transmits the storage result information to the information processing apparatus 1 via the network NWA. The storage result information is the information indicating the storage result.

The storage result is the storage result of the second electronic file in the storage area of the storage device 4. The storage result is a storage success or a storage failure. The storage success result indicates that the multi-function peripheral 2 was able to store the second electronic file in the storage area of the storage device 4. The storage failure result indicatesmeans that the multi-function peripheral 2 was unable to store the second electronic file in the storage area of the storage device 4.

The processing circuit 11 of the information processing apparatus 1 receives the storage result information (ACT45). ACT45 may be processed by the reception unit 113. In ACT45, for example, the processing circuit 11 receives the storage result information from the multi-function peripheral 2 via the network NWA.

The processing circuit 11 of the information processing apparatus 1 controls the management of the second electronic file stored in the electronic file storage area 133 based on the storage result indicated by the storage result information (ACT46). ACT46 may be processed by the management control unit 118. In ACT46, for example, if the storage result is successful, the processing circuit 11 deletes the second electronic file from the electronic file storage area 133. If the storage result is a storage failure, the processing circuit 11 maintains the second electronic file in the state of being stored in the electronic file storage area 133.

The processing circuit 11 controls the management of the storage processing information stored in the electronic file storage area 133 based on the storage result, similar to the second electronic file. For example, if the storage result is successful, the processing circuit 11 deletes the storage processing information from the electronic file storage area 133. If the storage result is a storage failure, the processing circuit 11 maintains the storage processing information in the state of being stored in the electronic file storage area 133.

Although ACT41 describes an example in which the processing circuit 11 transmits the second electronic file or the like to the multi-function peripheral 2 as a response to the request, it is not limited thereto. Communication such as MQTT may be used between the information processing apparatus 1 and the multi-function peripheral 2. In this case, the processing circuit 11 can transmit the second electronic file or the like to the multi-function peripheral 2 without requiring a request from the multi-function peripheral 2 when the connection is tied.

As described above, the information processing apparatus 1 can transmit the second electronic file and the storage destination information to the multi-function peripheral 2. As a result, the information processing apparatus 1 can process the second electronic file to store the second electronic file in the storage area of the storage device 4 through the multi-function peripheral 2, despite the image processing apparatus not being accessible to the storage device 4 directly.

As described above, the information processing apparatus 1 can transmit the second electronic file and the storage destination information to the multi-function peripheral 2 based on the destination information. By referring to the destination information, the information processing apparatus 1 can transmit the second electronic file and the storage destination information to the multi-function peripheral 2 that can access the storage area of the storage device 4.

As described above, the information processing apparatus 1 can control the management of the second electronic file stored in the electronic file storage area 133 based on the storage result. As a result, the information processing apparatus 1 can delete the second electronic file stored in the electronic file storage area 133 at the appropriate time.

Although the above-described embodiment describes the multi-function peripheral 2 as an example of a communication device accessible to the storage device 4, the communication device is not limited to the multi-function peripheral 2. The communication device may be an on-premises server located in the network NWB. Note that in an environment where the multi-function peripheral 2 is already installed, it is not necessary to install a new server because the multi-function peripheral 2 can be used as a communication device. Therefore, it is preferable to use the multi-function peripheral 2 as a communication device in terms of operation and cost.

Although the above-described embodiment describes an example in which the storage 13 of the information processing apparatus 1 includes the registration device information storage area 131, the template information storage area 132, and the electronic file storage area 133, it is not limited thereto. The registration device information storage area 131, the template information storage area 132, and the electronic file storage area 133 may be included in the storage of a different device than the information processing apparatus 1.

Each part implemented by the processing circuit 11 described in the above-described embodiment is not limited to being implemented in one device such as the information processing apparatus 1. The respective parts may be implemented in a plurality of devices in a distributed manner. In this case, the collection of the plurality of devices is an example of an information processing apparatus.

The above-described embodiments may be applied to a method performed by one or more devices. The above-described embodiments may be applied to a program capable of causing a computer of one or more devices to perform each function. The above-described embodiments may be applied to a storage medium storing a program.

Each of the one or more circuits that constitute a processing circuit executes one or more among a plurality of processes. If the processing circuit is configured with a single circuit, the single circuit executes all of the plurality of processes. If the processing circuit is configured with a plurality of circuits, each of the plurality of circuits executes a portion of the plurality of processes. A portion of the plurality of processes may be one among the plurality of processes or may be two or more among the plurality of processes. If the processing circuit is configured with a plurality of circuits, the plurality of circuits may be included in a single apparatus or may be distributed across a plurality of apparatuses.

The program may be transferred in a state of being stored in the device according to the embodiment or may be transferred in a state of not being stored in the device. In the latter case, the program may be transferred via a network or may be transferred in a state of being recorded on a recording medium. The recording medium is a non-transitory tangible medium. The recording medium is a computer-readable medium. The recording medium may be a CD-ROM, memory card, or any other medium capable of storing the program and readable by a computer, regardless of its form.

While certain embodiments have been described, these embodiments have been presented by way of example only and are not intended to limit the scope of the disclosure. Indeed, the novel embodiments described herein may be embodied in a variety of other forms; furthermore, various omissions, substitutions and changes in the form of the embodiments described herein may be made without departing from the framework of the disclosure. The accompanying claims and their equivalents are intended to cover such forms or modifications as would fall within the scope of the disclosure.

Some embodiments described above may be represented as follows.
(1) An information processing apparatus that is not accessible to a storage device, the apparatus including:
   a reception unit configured to receive a first electronic file; and
   a transmission unit configured to transmit a second electronic file, which is the same electronic file as the first electronic file or an electronic file generated based on the first electronic file, and storage destination information indicating a storage area of the storage device as a storage destination of the second electronic file to a communication device accessible to the storage device.
(2) The information processing apparatus according to (1), wherein the transmission unit transmits the second electronic file and the storage destination information to the communication device based on the destination information indicating the communication device as the destination of the second electronic file.
(3) The information processing apparatus according to (2), further including a processing unit configured to confirm the result of the communication device accessing the storage area of the storage device based on the storage destination information and the destination information.
(4) The information processing apparatus according to (1), further including a control unit configured to control the management of the second electronic file in the information processing apparatus based on the storage result of the second electronic file in the storage area of the storage device.
(5) An information processing system including:
   an information processing apparatus that is not accessible to a storage device; and
   a communication device accessible to the storage device; wherein
   the information processing apparatus including:
      a reception unit configured to receive a first electronic file, and
      a transmission unit configured to transmit a second electronic file, which is the same electronic file as the first electronic file or an electronic file generated based on the first electronic file, and storage destination information indicating a storage area of the storage device as a storage destination of the second electronic file to the communication device,
      the communication device including:
         a reception unit configured to receive the second electronic file and the storage destination information from the information processing apparatus, and
         a storage processing unit configured to store the second electronic file in a storage area of the storage device based on the storage destination information.
(6) A method of causing a computer of an information processing apparatus that is not accessible to a storage device to execute:
   a function of receiving a first electronic file, and
   a function of transmitting a second electronic file, which is the same electronic file as the first electronic file or an electronic file generated based on the first electronic file, and storage destination information indicating a storage area of the storage device as a storage destination of the second electronic file to a communication device accessible to the storage device.

## Claims

1. An information processing apparatus (1) that is not accessible to a storage device (4), the information processing apparatus comprising:
a receiver configured to receive a first electronic file; and
a transmitter configured to transmit (a) a second electronic file, which is a same electronic file as the first electronic file or is an electronic file generated based on the first electronic file, and (b) storage destination information indicating a storage area of the storage device as a storage destination of the second electronic file to a communication device accessible to the storage device.

2. The information processing apparatus of claim 1, wherein the transmitter transmits the second electronic file and the storage destination information to the communication device based on destination information indicating the communication device as a destination of the second electronic file.

3. The information processing apparatus of claim 2, further comprising:
a processor configured to confirm a result of the communication device accessing the storage area of the storage device based on the storage destination information and the destination information.

4. The information processing apparatus of any one of claims 1 to 3, further comprising:
a controller configured to control management of the second electronic file in the information processing apparatus based on a storage result of the second electronic file in the storage area of the storage device.

5. The information processing apparatus of claim 4, wherein the storage result of the second electronic file is a storage success or a storage failure, the storage success indicating that the second electronic file was stored in the storage area of the storage device and the storage failure indicating that the second electronic file was not stored in the storage area of the storage device.

6. An information processing system comprising:
an information processing apparatus that is not accessible to a storage device; and
a communication device accessible to the storage device,
the information processing apparatus comprising:
a first receiver configured to receive a first electronic file, and
a transmitter configured to transmit (a) a second electronic file, which is a same electronic file as the first electronic file or an electronic file generated based on the first electronic file, and (b) storage destination information indicating a storage area of the storage device as a storage destination of the second electronic file to the communication device, and
the communication device comprising:
a second receiver configured to receive the second electronic file and the storage destination information from the information processing apparatus, and
a storage processor configured to store the second electronic file in a storage area of the storage device based on the storage destination information.

7. The information processing system of claim 6, wherein the transmitter transmits the second electronic file and the storage destination information to the communication device based on destination information indicating the communication device as a destination of the second electronic file.

8. The information processing system of claim 7, further comprising:
a processor configured to confirm a result of the communication device accessing the storage area of the storage device based on the storage destination information and the destination information.

9. The information processing system of any one of claims 6 to 8, further comprising:
a controller configured to control management of the second electronic file in the information processing apparatus based on a storage result of the second electronic file in the storage area of the storage device.

10. The information processing system of claim 9, wherein the storage result of the second electronic file is a storage success or a storage failure, the storage success indicating that the second electronic file was stored in the storage area of the storage device and the storage failure indicating that the second electronic file was not stored in the storage area of the storage device.

11. A method, comprising:
receiving, by an information processing apparatus that is not accessible to a storage device, a first electronic file,
transmitting, by the information processing apparatus, a second electronic file, which is a same electronic file as the first electronic file or an electronic file generated based on the first electronic file, and
transmitting, by the information processing apparatus, storage destination information indicating a storage area of the storage device as a storage destination of the second electronic file to a communication device accessible to the storage device.

12. The method of claim 11, further comprising transmitting the second electronic file and the storage destination information to the communication device based on destination information indicating the communication device as a destination of the second electronic file.

13. The method of claim 12, further comprising confirming a result of the communication device accessing the storage area of the storage device based on the storage destination information and the destination information.

14. The method of any one of claims 11 to 13, controlling management of the second electronic file in the information processing apparatus based on a storage result of the second electronic file in the storage area of the storage device.

15. The method of claim 14, wherein the storage result of the second electronic file is a storage success or a storage failure, the storage success indicating that the second electronic file was stored in the storage area of the storage device and the storage failure indicating that the second electronic file was not stored in the storage area of the storage device.
